# EUROPÄISCHE PATENTSCHRIFT

(11) **EP 3 057 815 B1**
(45) Veröffentlichungstag und Bekanntmachung des Hinweises auf die Patenterteilung: **20.02.2019**
(21) Anmeldenummer: 14777356.8
(22) Anmeldetag: 30.09.2014
(51) Int. Cl.: B60H 1/00, B60H 1/32, B60H 3/02

(54) **KRAFTFAHRZEUG MIT EINER KLIMAANLAGE**
VEHICLE WITH AN AIR CONDITIONER
VÉHICULE POURVU D'UNE CLIMATISATION

(30) Priorität: 14.10.2013 CH 17602013
(43) Veröffentlichungstag der Anmeldung: 24.08.2016
(73) Patentinhaber: WEIDPLAS GmbH, 8700 Küsnacht (CH)
(72) Erfinder: DAL VECCHIO, Piero, 8734 Ermenswil (CH); HARKE, Stefan, 74889 Sinsheim (DE); MÜLLER, Armin, 8722 Kaltbrunn (CH); BÖLSTERLI, Christian, 8635 Dürnten (CH)
(74) Vertreter: Rutz, Andrea
(86) Internationale Anmeldenummer: PCT/EP2014/070948
(87) Internationale Veröffentlichungsnummer: WO 2015/055427

(56) Entgegenhaltungen:
- EP-A1- 1 728 662
- WO-A1-2011/010382
- WO-A2-2005/053974
- WO-A2-2009/037676
- DE-A1- 19 754 174
- DE-A1-102011 013 856

## Beschreibung

### Gegenstand

Die Erfindung betrifft ein Kraftfahrzeug mit einem Fahrgastinnenraum sowie einem Motorraum, wobei der Fahrgastinnenraum vom Motorraum durch eine Stirnwand getrennt ist, mit einer Klimaanlage zum Heizen und / oder Kühlen des Fahrgastinnenraumes, die einen Verdichter, ein Expansionsventil, einen ersten Wärmeübertrager und mindestens einen zweiten Wärmeübertrager umfasst, welche mittels eines Wärmeübertragungsmediums fluidisch miteinander verbunden sind, weiter umfassend eine erste Leitstruktur zur Leitung eines Luftstromes von einem äusseren Karosseriedurchbruch in den ersten Wärmeübertrager, der geeignet ist, einen Energieaustausch zwischen dem Wärmeübertragungsmedium und dem Luftstrom darzustellen, wobei der erste Wärmeübertrager mit dem Fahrgastinnnraum verbunden ist zum Zuführen des ersten Luftstroms in den Fahrgastinnenraum.

### Stand der Technik

Kraftfahrzeuge mit Klimaanlagen, die zum Kühlen eines Fahrgastinneraumes geeignet sind, sind dem Fachmann seit langem bekannt. Sie sind so aufgebaut wie im obigen Abschnitt "Gegenstand" beschrieben, wobei der erste Wärmeübertrager als sogennanter Verdampfer zur Übetragung von Kälteenergie auf den Luftstrom, welcher dem Fahrgastinnenraum zugeführt wird, ausgebildet ist. Es ist bekannt, dass derartige Klimaanlagen nur mit einem hohen Energieaufwand betrieben werden können.

Ein Kraftfahrzeug mit einer Klimaanlage, die zum Heizen und / oder Kühlen des Fahrgastinnenraumes geeignet ist, ist in der DE 198 066 54 A1 angegeben. Diese Klimaanlage umfasst ein Wärmeübertragungsmedium, welches phasenweise im gasförmigen, flüssigen und überkritischen Zustand vorliegt. Ein Verdichter fördert das Wärmeübertragungsmedium unter hohem Druck über ein Expansionsventil und einen ersten Wärmeübertrager, der geeignet ist, einen Energieaustausch zwischen dem Wärmeübertragungsmedium und einem Luftstrom darzustellen, der in den Fahrgastinnenraum geleitet wird, hin zu einem zweiten Wärmeübertrager. Typische Drucke des Wärmeübertragungsmediums sind ca. 3 bis 70 bar für teilfluorierte Wärmeübertragungsmedien und bis 150 bar für Kohlendioxid. Die Klimaanlage kann durch geeignete Wahl und Verschaltung der gewählten Komponenten der Klimaanlage sowohl im Heizmodus als sogenannte Wärmepumpe betrieben werden, die geeignet ist, unabhängig von der Art und dem Betriebszustand eines Vortriebsaggregates des Kraftfahrzeuges, Heizenergie für den Fahrgastinnenraum zur Verfügung zu stellen, als auch im Kühlmodus als Kälteanlage betrieben werden, die geeignet ist, Kälteenergie dem Fahrgastinnenraum zur Verfügung zu stellen. Als bevorzugtes Wärmeübertragungsmedium wird verdichtetes Kohlendioxid vorgschlagen. Solche Klimaanlagen weisen jedoch unabhängig von der Wahl des Wärmeübertragungsmediums zu dessen Betrieb einen hohen Energiebedarf auf.

Zur Verbesserung der Wirksamkeit der Klimaanlage, d.h. der Betriebsfähigkeit unter ungünstigen Umgebungsbedingungen, muss zudem häufig bei dieser Klimaanlage ein innerer Wärmetauscher vorgesehen werden, der einen inneren Energieübertrag des Wärmeübertragungsmediums an verschiedenen Stellen der Klimaanlage ermöglicht. Diese inneren Wärmeübertrager sind insbesondere bei Wärmeübertragungsmedien wie beispielsweise Kohlendioxid erforderlich, die zumindest teilweise transkritisch betrieben werden müssen. Die thermodynamische Wirkungsweise eines solchen inneren Wärmeübertragers ist in der Fig. 4 der WO2008/003841 A1 in einem log p / h Diagramm angegeben, aus dem hervorgeht, dass mit Hilfe eines inneren Wärmeübertragers die transkritische Betriebsweise trotz ungünstiger Umgebungsbedingungen, insbesondere bei sehr hohen Umgebungstemperaturen, möglich ist, aber einen höheren Energieaufwand erfordert. Prinzipiell gilt dieser Nachteil sowohl für den Fall, dass der Fahrgastinnenraum geheizt werden soll als auch für den Fall einer gewünschten Kühlung des Fahrgastinnenraums.

Zur Steigerung der Energieeffizenz des Kraftfahrzeuges wird in der EP1316 450 A1 vorgeschlagen, in den fluidischen Zyklus des Wärmeübertragungsmediums der als Kälteanlage betriebenen Klimaanlage einen zusätzlichen Wärmeübertrager einzufügen, der geeignet ist, am als Verdampfer betriebenen ersten Wärmeübertrager der Klimaanlage anfallendes Kondenswasser wieder zu verdampfen und damit das Wärmeübertragungsmedium zusätzlich zu kühlen. Der zusätzliche Wärmeübertrager kann dabei an verschiedenen Stellen in dem fluidischen Zyklus des Wärmeübertragungsediums vorgesehen sein. Es kann auch vorgesehen sein, dass das anfallende Kondenswasser mit Hilfe überströmender Umgebungsluft an diesem weiteren Wärmeübertrager verdunstet wird. Es wird beschrieben, dass diese Ausführungsform der Klimaanlage insbesondere bei sehr hohen Temperaturen und gleichzeitig geringen relativen Luftfeuchtigkeiten der Umgebungsluft wirksam ist.

Nachteilig ist bei der Klimaanlage gemäss EP1316 450 A1, dass die Verdampfungsenthalpie des Kondenswassers an dem zusätzlichen Wärmeübertrager grundsätzlich nur im Kühlbetrieb der Klimaanlage genutzt werden kann, nicht jedoch, wenn die Umgebungsbedingungen einen Heizbetrieb erfordern. Zudem ist die Wirksamkeit der Klimaanlage beschränkt auf wenige Zustände der Umgebungsluft mit nicht zu hohen und nicht zu niedrigen relativen Luftfeuchtigkeiten. Bei hohen relativen Luftfeuchtigkeiten sinkt die Verdunstungsrate an dem zusätzlichen Wärmeübertrager drastisch, bei relativen Luftfeuchtigkeiten von 100%, also bei warmem Regen- oder Nebelwetter, ist sogar gar keine Verdunstungskühlung und somit keine Energieeinsparung mehr möglich. Ein ähnlicher Effekt tritt bei besonders trockener Umgebungsluft auf, beispielsweise in Wüstenklimaten. Dann ist der Gehalt an gasförmigem Wasser in der Umgebungsluft so niedrig, dass keine oder nur eine sehr geringe Kondensation an dem ersten als Verdampfer betriebenen Wärmeübertrager stattfinden kann. Somit steht kein Wasser oder nur geringe Wassermengen zur Verfügung, die gewünschte Verdunstungskühlung kann sich unter diesen Umgebungsbedingungen ebenfalls nicht oder nicht ausreichend entfalten.

Des Weiteren offenbart die WO 2005/053974 A2 ein Kraftfahrzeugt gemäss Oberbegriff des Anspruchs 1.

### Aufgabe

Es ist somit Aufgabe der Erfindung, ein Kraftfahrzeug mit einer Klimaanlage zum Heizen und / oder Kühlen des Fahrgastinnenraumes bereitzustellen, welches einen energieeffizienteren Betrieb der Klimaanlage, insbesondere auch unter ungünstigen Umgebungsbedingungen, ermöglicht.

### Beschreibung der Erfindung

Die Aufgabe wird erfindungsgemäss dadurch gelöst, dass ein Kraftfahrzeug bereit gestellt wird mit einem Fahrgastinnenraum sowie einem Motorraum, wobei der Fahrgastinnenraum vom Motorraum durch eine Stirnwand getrennt ist, mit einer Klimaanlage zum Heizen und / oder Kühlen des Fahrgastinnenraumes, die einen Verdichter, ein Expansionsventil, einen ersten Wärmeübertrager und mindestens einen zweiten Wärmeübertrager umfasst, welche mittels eines Wärmeübertragungsmediums fluidisch miteinander verbunden sind, weiter umfassend eine erste Leitstruktur zur Leitung eines ersten Luftstromes von einem äusseren Karosseriedurchbruch in den ersten Wärmeübertrager, der geeignet ist, einen Energieaustausch zwischen dem Wärmeübertragungsmedium und dem ersten Luftstrom darzustellen, wobei der erste Wärmeübertrager mit dem Fahrgastinnenraum verbunden ist zum Zuführen des ersten Luftstroms in den Fahrgastinnenraum, dadurch gekennzeichnet, dass eine zweite Leitstruktur für einen zweiten Luftstrom vorgesehen ist, die geeignet ist, Luft aus dem Fahrgastinnenraum in den zweiten Wärmeübertrager zu leiten, der geeignet ist, einen Energieaustausch zwischen dem Wärmeübertragungsmedium und dem zweiten Luftstrom darzustellen.

Diesem erfindungsgemässen Kraftfahrzeug liegt die Erkenntnis zugrunde, dass die Luft, die sich im Fahrgastinnraum befindet, energetisch in jedem Betriebsmodus, d.h. im Heiz- und im Kühlmodus und in jedem Temperatur- und Feuchtigkeitszustand der Umgebungsluft, wertvoll ist. Wird der Fall betrachtet, bei dem eine Kühlung des Fahrgastinnenraumes vorgenommen wird, so wird die in den Fahrgastinnenraum durch die erste Leitstruktur einströmende Luft durch den als Verdampfer betriebenen ersten Wärmeübertrager stark vorgekühlt und dabei gegebenenfalls auch entfeuchtet, bevor diese in den Fahrgastinnenraum strömt. Bei der Entfeuchtung entsteht Kondenswasser, welches energetisch wiederverwertet werden kann. Erfindungsgemäss kann die entfeuchtete, verbrauchte Luft im Fahrgastinnenraum, die eine deutlich niedrigere Temperatur als die Umgebungsluft aufweist, energetisch zur Zusatzkühlung des Wärmeübertragungsmediums der Klimaanlage verwendet werden. Unter verbrauchter Luft ist im Sinne der Erfindung Luft gemeint, die durch Wechselwirkung mit den Fahrzeuginsassen einen erhöhten Schadgasanteil aufweist. Als Schadgase seien beispielsweise Geruchsstoffe, insbesondere aus den Ausdünstungen der Fahrgäste, ebenso gemeint wie beispielsweise gasförmiges Kohlendioxid oder auch gasförmiges Wasser. Solche Schadgase begrenzen oder verhindern die Möglichkeit, einen Umluftbetrieb durchzuführen. Daher muss das Kraftfahrzeug immer mit einer hohen Luftaustauschrate betrieben werden, um negative Effekte der Schadgase auf die Fahrzeuginsassen zu vermeiden. Erfindungsgemäss wird der Energieinhalt dieser verbrauchten Luft verwertet. Es zeigte sich, dass der dominierende Faktor, der die notwendige Luftaustauschrate bestimmt, der Kohlendioxidgehalt aus der Atemluft der Fahrzeuginsassen ist. Somit verbleibt aufgrund der hohen notwendigen Austauschrate wegen des gasförmigen Kohlendioxides die verbrauchte Luft auf einem niedrigen Temparaturniveau, wenn sie nach dem Einströmen in den Fahrgastinnenraum nach kurzer Zeit bereits wieder aus dem Fahrgastinnenraum entfernt werden muss. Diese Luft kann nun mit Hilfe der zweiten Leitstruktur in den zweiten Wärmeübertrager der Klimaanlage des erfindungsgemässen Kraftfahrzeuges geführt werden, so dass ein Energieaustausch mit dem Wärmeübertragungsmedium der Klimaanlage möglich ist. In dem beschriebenen Fall der gewünschten Fahrgastinnenraumkühlung hat der zweite Wärmeübertrager dieselbe Funktion wie der Verflüssiger einer Klimaanlage des Standes der Technik. Das erfindungsgemässe Kraftfahrzeug stellt somit eine effektive Zusatzkühlung bereit, so dass das Wärmeübertragungsmedium dann bereits kälter an einer fluidisch stromabwärts gelegenen Komponente der Klimaanlage des erfindungsgemässen Kraftfahrzeuges ankommt. Diese Komponente kann beispielsweise ein Expansionsventil oder auch ein optional in der Klimaanlage vorgesehener innerer Wärmeübertrager sein.

Das erfindungsgemässe Kraftfahrzeug kann auch in dem Fall, dass die Luft des Fahrgastinnenraumes aufgeheizt werden soll, energetisch günstiger betrieben werden. In diesem Betriebszustand wird der erste Wärmeübertrager als Heizungswärmeübertrager betrieben, welcher die Luft, bevor diese in den Fahrgastinnenraum einströmt, auf eine gewünschte Temperatur aufheizt. Die verbrauchte warme Luft kann nunmehr mit Hilfe der zweiten Leitstruktur in den zweiten Wärmeübertrager geleitet werden, der in diesem Betriebszustand als Verdampfer wirkt. Die zum Energieaustausch verfügbare Luft weist eine besonders hohe Temperatur, nämlich zumindest nahezu die Temperatur des Fahrgastinnenraumes, auf. Somit wird der als Verdampfer wirkende zweite Wärmeübertrager besonders effektiv betrieben, das Wärmeübertragungsmedium kann gut verdampfen, somit arbeitet die nun als Wärmepumpenheizung betriebene Klimaanlage ebenfalls besonders effizient.

Es hat sich somit gezeigt, dass die verbrauchte Luft des Fahrgastinnenraumes energetisch unabhängig von der Betriebsweise der Klimaanlage des erfindungsgemässen Kraftfahrzeuges, d.h. im Heiz- oder Kühlmodus, immer genau den Zustand aufweist, der erforderlich ist, um eine Verbesserung des Energieüberganges am zweiten Wärmeübertrager und somit ein energieeffizienten Betrieb der Klimaanlage zu gewährleisten.

Der zweite Wärmeübertrager ist nach dem Stand der Technik bevorzugt im Frontbereich des Kraftfahrzeuges angeordnet, wo er von der Umgebungsluft, beispielsweise durch den Fahrtwind, durchströmt wird. Es kann aber auch ein Luftfördermittel vorgesehen sein, welches auch bei Stillstand des Fahrzeuges einen Energieaustausch zwischen der Umgebungsluft und dem Wärmeübertragungsmedium ermöglicht. Der erfindungsgemässe Effekt der Effizienzverbesserung tritt auch dann ein, wenn die zweite Leitstruktur so ausgebildet ist, dass sich der zweite Luftstrom, bevor dieser in den zweiten Wärmeübertrager einströmt, mit der Umgebungsluft vermischt.

Nach einer Weiterbildung der Erfindung ist vorgesehen, dass die zweite Leitsruktur geeignet ist, den zweiten Luftstrom vor einen Teilbereich eines zweiten Wärmeübertragers zu leiten, der sich innerhalb des Wärmeübertragers bevorzugt fluidisch stromabwärts befindet. Nach dieser Ausgestaltung wird vermieden, dass eine Mischluft aus Umgebungsluft und dem zweiten Luftstrom entsteht, was die Effizenz der Anordnung nochmals erhöhen kann. Somit wird das Wärmeübertragungsfluid zunächst von der anströmenden Umgebungsluft vortemperiert und dann von dem zweiten Luftstrom nachtemperiert. Damit kann sichergestellt werden, dass der zweite Luftstrom besonders effizient eingesetzt werden kann. Das ist insbesondere dann der Fall, wenn die Umgebungsluft mit besonders hoher Strömungsgeschwindigkeit an dem zweiten Wärmeübertrager vorbeiströmt. Wird der zweite Luftstrom jedoch nur vor einen Teilbereich des zweiten Wärmeübertragers geführt, ist es möglich, unterschiedliche Strömungsgeschwindigkeiten zu realisieren und somit eine gute Ausnutzung des Energieinhalts des zweiten Luftstromes zu gewährleisten.

Bei der Klimaanlage des erfindungsgemässen Kraftfahrzeuges können im fluidischen Zyklus der Klimaanlage unterschiedliche Schaltventile und / oder Wärmeübertrager vorgesehen sein, falls die Klimaanlage einen Wechselbetrieb ermöglichen soll, d.h. dass die Klimaanlage im Kühl- und Heizmodus betrieben werden soll. Damit können dann unterschiedliche Wärmeübertrager, je nach gewünschten Betriebsbedingungen, ausgewählt und betrieben werden. Die zweite Leistruktur ist dann bevorzugt ebenso geeignet, den zweiten Luftstrom in den jeweiligen Wärmeübertrager zu fördern, bei dem der erfindungsgemässe Effekt eintritt oder am energieeffizientesten realisierbar ist.

Bevorzugt weist die Klimaanlage des erfindungsgemässen Kraftfahrzeuges wenigstens einen weiteren, zweiten Wärmeübertrager auf, wobei die zweite Leitstruktur geeignet ist, Luft aus dem Fahrgastinnenraum in wenigstens einen weiteren, zweiten Wärmeübertrager zu leiten. Dieser weitere, zweite Wärmeübertrager ist für eine zu dem zweiten Wärmeübertrager gleichsinnigen Wärmeübertragung vorgesehen. Das bedeutet, dass im Falle der Betriebsweise, bei der eine Fahrgastinnenraumkühlung vorgenommen wird, das Wärmeübertragungsmedium im weiteren, zweiten Wärmeübertrager durch den zweiten Luftstrom ebenfalls gekühlt wird, im Heizungsfalle wird dieses vom zweiten Luftstrom ebenfalls aufgeheizt. Dieser weitere, zweite Wärmeübertrager kann nun geometrisch und fluidisch besonders gut an die gewünschten Verhältnisse angepasst werden. Beispielsweise kann der Wärmeübertrager so ausgelegt sein, dass eine besonders effiziente Energieübertragung bereits bei vergleichsweise geringen Luftvolumenströmen erfolgen kann. Typische Luftvolumenströme, die dem Fahrgastinnenraum von aussen zugeführt werden und die somit wieder aus dem Fahrgastinnenraum entfernt werden müssen, liegen bei einem normalen Personenkraftwagen bei 1 - 10 m³ / min. Luft. Bevorzugt werden jedoch Luftvolumenströme von 1-3 m³ / min., dem Fahrgastinnenraum zugeführt und aus dem Fahrgastinnenraum wieder abgeführt Bei Grossraumfahrzeugen, beispielsweise bei einem Bus zur Personenbeförderung, müssen die Luftvolumenströme natürlich den Verhältnissen, wie beispielsweise der Anzahl der Fahrzeuginsassen, angepasst werden. Umgebungsluftzuführmengen von 0,5 - 1 m³ / min und Person haben sich für Kraftfahrzeuge allgemein bewährt.

Falls die Klimaanlage wenigstens einen weiteren, zweiten Wärmeübertrager aufweist, so ist die zweite Leitstruktur bevorzugt so ausgestaltet, dass der zweite Luftstrom jeweils in den weiteren, zweiten Wärmeübertrager oder in die weiteren, zweiten Wärmeübertrager geführt werden kann. Bevorzugt ist die zweite Leitstruktur derart ausgebildet, dass der zweite Luftstrom in den oder die weiteren zweiten Wärmeübertrager geleitet wird mit dem oder denen eine Abkühlung oder eine Erwärmung des Wärmeübertragunsmediums bewirkt werden soll oder mit welchem oder mit welchen dies optimal gestaltbar ist. Dazu kann es je nach Verschaltung der Klimaanlage für beide Modi, d.h. beim Heizen oder Kühlen, notwendig sein, dass die zweite Leitstruktur mit Mitteln zum Zuführen des zweiten Luftstromes zum jeweils gewünschten weiteren, zweiten Wärmeübertrager oder den jeweils gewünschten weiteren, zweiten Wärmeübertragern ausgestattet ist.

Bevorzugt ist vorgesehen, dass der weitere zweite Wärmeübertrager kleiner dimensioniert ist als der zweite Wärmeübertrager. Damit ist dann sichergestellt, dass der zweite Wärmeübertrager, falls dieser mit einem sehr hohen Umgebungsluftstrom, beispielsweise mit dem Fahrtwind, betrieben wird, sehr effizient arbeitet und der weitere zweite Wärmeübertrager dem geringeren zweiten Luftstrom optimal angepasst werden kann. Der Aufbau der Klimaanlage wird zudem vereinfacht.

Nach einer Weiterbildung der Erfindung ist vorgesehen, dass der weitere, zweite Wärmeüberrager benachbart zu der Stirnwand des Kraftfahrzeuges angeordnet ist. Unter dem Ausdruck "benachbart zur Stirnwand" ist zu verstehen, dass der weitere, zweite Wärmeübertrager zwischen dem Motor des Kraftfahrzeuges und der Stirnwand im Motorraum an geeigneter Stelle angeordnet ist. Eine solche Anordung hat den Vorteil, dass die zweite Leitstruktur vergleichsweise klein ausfallen kann. Dies bewirkt wiederum den Vorteil, dass weitgehend ein unerwünschter Wärmeübergang von Luft aus dem Motorraum auf den zweiten Luftstrom vermieden werden kann. Der Lufteinlass der zweiten Leitstruktur ist dann bevorzugt in der Stirnwand oder im Fahrgastinnenraum angeordnet, wobei der Ort des Lufteinlasses nach den Gegebenheiten des Fahrzeuges gewählt werden kann. Beispielsweise kann der Lufteinlass hinter der ersten oder der zweiten Fahrgastreihe beginnen, was eine gute Luftverteilung des ersten Luftstromes im Fahrgastinnenraum ermöglichen kann. Der in der zweiten Leitstruktur geführte zweite Luftstrom wird dann durch die Stirnwand des Kraftfahrzeuges geführt.

Nach einer Weiterbildung der Erfindung ist vorgesehen, dass der weitere, zweite Wärmeübertrager innerhalb des Fahrgastinnenraumes, insbesondere innerhalb einer Instrumentenverkleidung des Kraftfahrzeuges, angeordnet ist. Diese Anordnung vermeidet, dass für die zweite Luftleitstruktur ein Stirnwanddurchbruch vorgesehen werden muss. Es müssen lediglich Leitungen, die das Wärmeübertragungsmedium führen, durch die Stirnwand geführt werden. Da das Wärmeübertragungsmedium, wie bereits beschrieben, unter sehr hohem Druck betrieben wird, sind diese Leitungen geometrisch sehr viel kleiner auslegbar als Luftleitstrukturen. Der weitere, zweite Wärmeübertrager kann hinter der Instrumentenverkleidung angeordnet sein, wodurch eine gute optische Abdeckung der Strukturen, d.h. des wenigstens einen weiteren, zweiten Wärmeübertrages sowie der genannten Leitungen, ermöglicht wird. Es kann aber auch vorgesehen sein, den weiteren, zweiten Wärmeübertrager im rückwärtigen Fahrgastinnenraum oder im Kofferraum anzuordnen. Dann kann die zweite Leitstruktur besonders einfach ausgestaltet werden und es ist möglich, die Luft nach dem Passieren des weiteren, zweiten Wärmeübertragers rückwärtig aus dem Kraftfahrzeug wegzubefördern, wobei die äusseren aerodynamischen Druckverhältnisse derart ausgenutzt werden können, dass die Luft nach Passieren des weiteren, zweiten Wärmeübertagers aus dem Fahrgastinnenraum durch Unterdruck herausgesaugt wird. Diese Anordnung ermöglicht somit einen besonders einfach bereitgestellten zweiten Luftstrom.

Nach einer Weiterbildung der Erfindung ist vorgesehen, dass die erste Leitstruktur geeignet ist, tropfenförmiges und/oder schwallförmiges Wasser aus dem ersten Luftstrom abzuscheiden und das abgeschiedene Wasser aus der ersten Leitstruktur und insbesondere aus dem Kraftfahrzeug abzuscheiden. Da die erste Leitstruktur vorgesehen ist, den ersten Luftstrom von einem äusseren Karosseriedurchbruch in den Fahrgastinnenraum zu leiten, ist es besonders vorteilhaft, die erste Leitstruktur so auszugestalten, dass bei einer Regenfahrt oder bei Betrieb in einer Waschanlage das mit dem ersten Luftstrom vermischte Wasser sicher abgeschieden werden kann, bevor es mit dem ersten Wärmeübertrager in Kontakt tritt. Damit wird verhindert, dass tropfenförmiges Wasser sich am ersten Wärmeübertrager sammelt und mit der Luft des ersten Luftstromes zusammen in der Temperatur verändert wird, was zu einer Verschlechterung der energetischen Situation führen würde. Für die Abscheidung von Schwallwasser und tropfenförmigem Wasser aus dem ersten Luftstrom ist innerhalb der ersten Leitstruktur ein Wasserkasten mit einem Lufteinlass, einer Abscheidestruktur, einem Auslass für abgeschiedenes Wasser und einen Luftauslass angeordnet.

Erfindungsgemäss ist vorgesehen, dass die erste und die zweite Leitstruktur so zueinander angeordnet und ausgebildet sind, dass ein Energieaustausch zwischen dem ersten und zweiten Luftstrom möglich ist. Der Vorteil einer solchen Anordnung sei an dem Betriebszustand verdeutlicht, der eine Kühlung des Fahrgastinnenraumes bei hoher Sonneneinstrahlung ermöglichen soll. Die erste Leitstruktur ist geeignet, Umgebungsluft durch den äusseren Karosseriedurchbruch hindurch zu leiten. Die erste Leitstruktur und der äussere Karosserieduchbruch sind dabei bevorzugt im Bereich des Überganges der Windschutzscheibe zur Motorhaube angeordnet. Dabei erwärmt sich die Umgebungsluft durch die Sonneneinstrahlung während des Durchtritts durch die erste Leitstruktur erheblich. Es wurden Aufheizungen der Umgebungsluft von bis zu 15°C gemessen, was die Energieeffizienz der Klimaanlagen von Kraftfahrzeugen im Kühlmodus bedeutend verschlechtert. Insbesondere ist dieser Aufheizeffekt ausgeprägt, wenn ein bezüglich der Wasserabscheideleistung effizienter und somit grosser Wasserkasten mit einer grossen Oberfläche und einem geringen Strömungswiderstand motorraumseitig benachbart zur Stirnwand vorgesehen ist. Werden nun die erste und zweite Leitstruktur so ausgebildet, dass ein Energieaustausch zwischen dem ersten und dem zweiten Luftstrom ermöglicht wird, kann in diesem Betriebszustand der zusätzlich aufgeheizte erste Luftstrom Wärme an den zweiten Luftstrom abgeben. Hierdurch wird der erste Luftstrom vorgekühlt. Die erste und zweite Leitstruktur sind somit bei dieser Weiterbildung der Erfindung zumindest teilweise als Niederdruck- Luft- Luft- Wärmeübertrager ausgebildet. Unter einem Niederdruck- Luft- Luft - Wärmeübertrager ist zu verstehen, dass beide Gase ungefähr bei Normaldruck von einem
Bar vorliegen. Geringe Druckabweichungen von dem Normaldruck ergeben sich gegebenenfalls aus dem Betrieb von allfälligen Luftfördermitteln, welche den ersten und/oder den zweiten Luftstrom bewirken. Bei den sonstigen in der Schrift erwähnten Wärmeübertragern liegt das Wärmeübertragungsmedium, wie bereits beschrieben, immer unter hohem Druck von mehreren Bar vor, auch wenn das Medium an dem oder den Wärmeübertragern gasförmig oder überkritisch ist. Es können sogar Drucke bis über 100 bar realisiert sein. Erfahrungsgemäss ist es nicht nötig, die Effizienz dieses Niederdruck-Luft- Luft- Wärmeübertragers besonders hoch auszugestalten, so dass der zweite Luftstrom noch mittels der zweiten Leitstruktur Energie in den zweiten Wärmeübertrager und / oder in wenigstens einen allfälligen weiteren zweiten Wärmeübertrager führen kann. Insbesondere ist es natürlich vorteilhaft, den allfällig in die erste Leitstruktur eingebundenen Wasserkasten zumindest überwiegend, bevorzugter zumindest weitgehend als Niederdruck- Luft- Luft- Wärmeübertrager auszugestalten. Mit einer solchen Anordnung ist sichergestellt, dass eine geringere oder gar keine ungünstige Aufheizung der Umgebungsluft stattfindet und gleichzeitig die Restenergie des zweiten Lufstromes noch zur Kühlung des Wärmeübertragungsmediums im zweiten Wärmeübertrager und / oder in einem allfälligen wenigstens einen weiteren, zweiten Wärmeübertrager zur Verfügung steht. Solche Anordnungen sind somit ganz besonders energieefffizient. Ein Stoffaustausch zwischen der ersten und der zweiten Luftleitstruktur sollte dabei weitgehend verhindert werden, da solche Undichtigkeiten die Energiebilanz verschlechtern können.

Nach einer Weiterbildung der Erfindung ist vorgesehen, dass die erste und/ oder die zweite Leitstruktur zumindest im Motorraum mit einer thermischen Isolation zur Umgebungsluft hin und/oder zur Motorraumluft hin versehen ist. Mit dieser Ausgestaltung wird sichergestellt, dass sich der erste und / oder der zweite Luftstrom während des Weges durch die jeweilige Leitstruktur energetisch möglichst wenig negativ verändert. Allfällige negative Veränderungen verringern die Effizenz der Klimaanlage des erfindungsgemässen Kraftfahrzeuges, was durch das Vorsehen einer geeigneten thermischen Isolation zumindest verringert oder weitgehend verhindert werden kann. Diese Weiterbildung der Erfindung ist somit besonders energieeffizient.

Nach einer Weiterbildung der Erfindung ist vorgesehen, dass das Kraftfahrzeug mit Mitteln zum Auffüllen und Aufbewahren eines Wasservorrats und des weiteren mit Mitteln ausgestattet ist, die es ermöglichen, bevorratetes Wasser in die zweite Leitstruktur zu befördern und gegebenenfalls dort zu zerstäuben und / oder zu verdampfen. Ein Wasserzerstäuber kann beispielsweise ein Ultraschallzerstäuber sein. Dieser Zerstäuber erzeugt einen besonders feintröpfigen Nebel, der wiederum zu hohen und effektiven Verdampfungen führt. Diese Anordnung führt zu einem besonders energieeffizienten Betrieb der Klimaanlaage, wenn der Fahrgastginnenraum gekühlt werden soll. Entscheidend dabei ist, dass der erste Luftstrom vor dem Eintritt in den Fahrgastinnenraum nicht nur abgekühlt, sondern je nach Umgebungsbedingungen auch entfeuchtet wird. Der erste Wäreübertrager wird grundsätzlich so betrieben, dass immer eine vergleichsweise trockene Luft dem Fahrgastinnenraum zur Verfügung gestellt wird, was dem allgemeinen Komfortempfinden von Fahrzeuginsassen entspricht und einem allfälligen Scheibenbeschlag vorbeugt. Nach Verbrauch der Luft des Fahrgastinnenraumes wird die Luft der zweiten Leitstruktur zugeführt, wo zusätzlich Wasser aus dem Wasservorrat verdampft und / oder zerstäubt werden kann. Dadurch tritt eine zusätzliche intensive Verdunstungskühlung des zweiten Luftstromes ein, insbesondere, weil ja die zu befeuchtende Luft vergleichsweise trocken ist. Es wird somit nicht nur der energetische Zustand der Luft des Fahrgastinnenraumes genutzt, sondern gleichzeitig auch der energetische Aufwand der Trocknung des ersten Luftstromes rekuperiert. Diese Trocknungsenergierekuperation gelingt nun auch unter besonders ungünstigen Umgebungsbedingungen, beispielsweise, wenn die Umgebungsluft gesättigt ist mit gasförmigem Wasser, was bei Regen oder Nebel auftritt. Die Verdunstungskühlung ist ebenfalls nutzbar, wenn das Kraftfahrzeug in Wüstenklimaten mit geringem oder ohne Kondenswasseranfall betrieben wird, weil der Wasservorrat von aussen nachfüllbar ausgestaltet sein kann.

Bevorzugt ist weiterhin vorgesehen, dass der erste Wärmeübertrager mit Mitteln zum Auffangen von allfälligem Kondenswasser und zum Zuführen des Kondenswassers zu dem Mittel zum Aufbewahren eines Wasservorrats ausgestattet ist. Dies ermöglicht die Wiederverwendung des am ersten Wärmeübertrager anfallenden Kondenswassers, so dass der Vorratsbehälter nicht oder seltener von aussen nachbefüllt werden muss beziehungsweise kleiner ausgeführt sein kann.

Nach einer Weiterbildung der Erfindung ist vorgesehen, dass als Wärmeübertragungsmedium Kohlendioxid vorgesehen ist. Das Wärmeübertragungsmedium wird besonders im Sommerbetrieb, bei dem eine Kühlung des Fahrgastinnenraumes vorgesehen ist, im transkritischen Modus betrieben, was eine effiziente Rückkühlung am zweiten Wärmeübertrager erschwert. Erfindungsgemäss wird die Effizienz des zweiten Wärmeübertragers und/ oder des allfällig vorhandenen wenigstens einen weiteren zweiten Wärmeübertrager aber deutlich erhöht, so dass auch unter besonders ungünstigen Umgebungsbedingungen, d.h. sehr hoher Umgebungstemperaturen von beispielsweise 40°C oder mehr, die Klimaanlage noch sicher und mit hoher Kühlleistung betrieben werden kann.

Nach einer Weiterbildung der Erfindung ist vorgesehen, dass die Klimaanlage keinen inneren Wärmeübertrager enthält. Generell stellt der innere Wärmeübertrager bei Klimaanlagen des Standes der Technik eine Nachtemperierung der Klimaanlage sicher, wenn insbesondere der zweite Wärmeübertrager, je nach verwendetem Wärmeübertragungsmedium, keine ausreichende Energieeffizienz bereit stellen kann. Der innere Wärmeübertrager ermöglicht teilweise erst den Betrieb einer Klimaanlage des Standes der Technik, insbesondere im transkritischen Modus. Durch die Einfügung eines inneren Wärmeübertragers sinkt jedoch, wie bereits beschrieben, die Energieeffizenz. Wird jedoch die Energieeffizienz des zweiten Wärmeübertragers erfindungsgemäss erhöht, kann nach dieser Weiterbildung bei der Klimaanlage des erfindungsgemässen Kraftfahrzeuges der innere Wärmeübertrager wegfallen, was einen vereinfachten Aufbau der Klimaanlage ermöglicht. Zudem wird der Nachteil der verschlechterten Energieeffizienz vermieden.

Nach einer Weiterbildung der Erfindung ist vorgesehen, dass innerhalb der zweiten Leitstruktur ein Luftfördermittel vorgesehen ist. Diese Anordnung entfaltet ihre Vorteile insbesondere, wenn ein teilweiser Umluftbetrieb bei der Fahrzeugklimatisierung vorgesehen ist. Unter Umluftbetrieb ist zu verstehen, dass die verbrauchte Fahrgastluft wieder angesaugt und an geeigneter Stelle so der ersten Leitstruktur zugeführt wird, dass die verbrauchte Luft wieder den ersten Wärmeübertrager passiert. Die verbrauchte Luft kann somit mittels des ersten Wärmeübertragers temperiert und gegebenenfalls nachentfeuchtet werden, insbesondere kann allfällige gasförmige Feuchtigkeit, welche beispielsweise aus den Ausdünstungen der Fahrzeuginsassen resultieren, mittels der ersten Wärmeübertragers aus der verbrauchten Luft unter Kondenswasserbildung entfernt werden. Nachteilig bei einem ausschliesslichen Umluftbetrieb ist jedoch, dass der Anteil an gasförmigem Kohlendioxid im Fahrgastinnenraum sofort stark ansteigt, was einem sicheren Betrieb des Kraftfahrzeuges durch den Fahrzeuglenker schon bei vergleichsweise geringen Konzentrationen an Kohlendioxid im Fahrgastinnenraum entgegensteht. Deshalb kann es sinnvoll sein, einen gleichzeitigen teilweisen Umgebungsluft- und Umluftbetrieb vorzusehen. Erfindungsgemäss kann nun der Umgebungsluftanteil am ersten Luftstrom durch den geregelten Betrieb des zweiten Luftfördermittels in der zweiten Leitstruktur sicher gesteuert werden. Ist ein besonders exakter teilweiser Umluftbetrieb gewünscht, kann ein erstes Luftfördermittel in der ersten Leitstruktur vorgesehen sein, welches die Förderung des Umluftanteils darstellt. Durch den unabhängig gesteuerten Betrieb der beiden Luftfördermittel kann ein gleichzeitiger sehr präziser Umgebungsluft- und Umluftanteil im ersten Luftstrom, welcher in den Fahrgastinnenraum einströmt, eingestellt werden, ohne dass notwendigerweise Umluftklappen innerhalb der ersten Leitstruktur betätigt werden müssen. Diese Weiterbildung der Erfindung stellt zusätzlich sicher, dass die Luft, die in die zweite Leitstruktur hineinbefördert wird, sicher dem zweiten Wärmeübertrager und / oder wenigstens einem allfällig vorhandenen weiteren, zweiten Wärmeübertrager zugeführt wird, auch wenn erhöhte Strömungswiderstände in der zweiten Leitstruktur, je nach geometrischer Situation im Kraftfahrzeug, nicht vermieden werden können.

### Zeichnungen

Weitere vorteilhafte Merkmale ergeben sich aus den Beschreibungen bevorzugter Ausführungsbeispiele der Erfindung, die in den nachfolgenden Zeichnungen dargelegt sind, und aus den abhängigen Ansprüchen. Die Zeichnungen, die Ausführungsbeispiele und die Ansprüche enthalten zahlreiche Merkmale teilweise in Kombination. Der Fachmann wird jedoch die Merkmale zweckmässigerweise auch einzeln betrachten und / oder zu solchen weiteren Kombinationen zusammenfügen, die die gestellte Aufgabe in besonderer Weise lösen.
- Fig. 1: beschreibt ein erfindungsgemässes Kraftfahrzeug mit einer Klimaanlage
- Fig. 2: beschreibt eine weitere erfindungsgemässe Ausführungsform
- Fig. 3: beschreibt eine erfindungsgemässe Ausführungsform einer zweiten Leitstruktur
- Fig. 4: beschreibt eine weitere erfindungsgemässe Ausführungsform einer zweiten Leitstruktur
- Fig. 5: beschreibt eine erfindungsgemässe Ausführungsform unter Nutzung von verdampfbarem Wasser

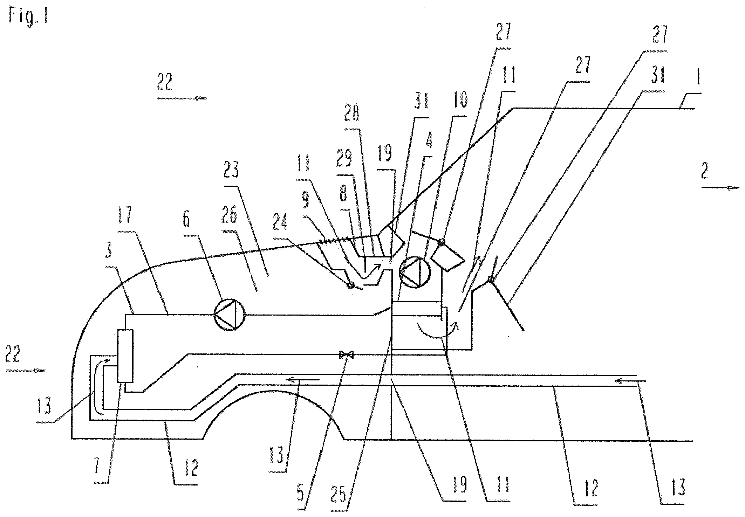

In Fig. 1 ist schematisch der vordere Teil eins Kraftfahrzeuges 1 mit einem Fahrgastinnenraum 2 dargestellt, welches von der Umgebungsluft 22 umhüllt wird. Weiter dargestellt ist die Klimaanlage 3 mit einem Verdichter 6, einem Expansionsventil 5, einem ersten Wärmeübertrager 4 und einem zweiten Wärmeübertrager 7. Diese Komponenten sind mittels einer fluidischen Verbindung 17 zusammengekoppelt. Die Klimaanlage 3 ist hermetisch dicht ausgestaltet und mit einem Wärmeübertragungsmedium unter hohem Druck von 3-150 bar befüllt. Der Verdichter 6 dieses Ausführungsbeispiels kann in zwei Richtungen betrieben werden. Erzeugt er im Bezug auf die Zeichnung einen Strom des Wärmeübertragungsmediums entgegen dem Uhrzeigersinn, so wird die Klimaanlage 3 im Kühlmodus betrieben, wird das Wärmeübertragungsmedium im Uhrzeigersinn betrieben, so wird die Klimaanlage 3 im Heizmodus betrieben.

Der erste Wärmeübertrager 4 ist in der ersten Leitstruktur 8 angeordnet. Diese ist geeignet, einen ersten Luftstrom 11 von einem äusseren Karosseriedurchbruch 9 durch die Stirnwand 25 mit dem Stirnwanddurchbruch 19 in den Fahrgastinnenraum 2 zuzuführen. Der erste Wärmeübertrager 4 ist somit geeignet, den Fahrgastinnenraum 2 zu temperieren, d.h. im Kühlmodus abzukühlen bzw. im Heizmodus zu erwärmen. Die erste Leitstruktur 8 kann so ausgebildet sein, dass fahrgastraumseitig des Stirnwanddurchbruches 19 weitere Komponenten angeordnet werden können. So kann ein erstes Luftfördermittel 10 und ein Luftfilter zur Reinigung der zugeführten Umgebungsluft 22 angeordnet werden. Es können zusätzlich weitere Komponenten vorgesehen sein, die auch zur Temperierung des Fahrgastinnenraumes 2 dienen können. Werden diese weiteren Komponenten in einem kompakten Modul zusammengefasst, spricht der Fachmann von einem Klimamodul, welches dann innerhalb einer Instrumentenverkleidung 31 angeordnet sein kann. Das Klimamodul ist jedenfalls Teil der ersten Leitstruktur 8. Die Komponenten Luftfilter 16 und erstes Luftfördermittel 10 sind fakultativ vorgesehen. So kann beispielsweise vorgesehen sein, dass der erste Luftstrom 11 durch die Fahrtbewegung des Kraftfahrzeuges 1 erzeugt wird. Dies kann bei geeigneter Platzierung des äusseren Karosseriedurchbruches 9 gewährleistet werden. Dann kann je nach gewünschter Betriebsweise der Klimaanlage 3 auf ein erstes Luftfördermittel 10 zur Erzeugung des ersten Luftstromes 11 verzichtet werden. Die erste Leitstruktur 8 kann eine oder mehrere gegebenenfalls verschliessbare Öffnungen 27 aufweisen, mit Hilfe derer Luft aus dem Fahrgastinnenraum 2 der ersten Leitstruktur 8 wieder zugeführt werden kann. Diese Luft kann dann zumindest wieder über den ersten Wärmeübertrager 4 geleitet werden. Diese Vorrichtung ist dann für einen Umluftbetrieb geeignet. Die erste Leitstruktur 8 kann nach dem ersten Wärmeübertrager 4 weitergeführt sein, so dass der erste Luftstrom 11 zu einem gewünschten Ort innerhalb des Fahrgastinnenraums 2 zuführbar ist. Hier kann die erste Leitstruktur 8 auch verzweigt und mit weiteren Absperrelementen versehen sein, was hier nicht dargestellt ist. Motorraumseitig der Stirnwand 25 ist die erste Leitstruktur 8 dieses Ausführungsbeispiels als Wasserkasten 28 ausgeführt. Die erste Leitstruktur 8 weist im Motorraum 26 eine Aufdickung auf, innerhalb derer ein Abscheideelement 29 angeordnet ist. Solche Ausgestaltungen ermöglichen eine effiziente und sichere Abscheidung von flüssigem oder festem Wasser, welches der Umgebungsluft 22 beigemengt ist. Ein verschliessbarer Wasserablass 24 muss dann vorgesehen sein.

Weiter dargestellt ist die zweite Leitstruktur 12, die hier rohrförmig dargestellt ist. Die rohrförmige Ausgestaltung kann mit runder oder rechteckiger Geometrie vorgesehen sein, es können aber an sich beliebige Formen gewählt sein, die an die geometrischen Anforderungen des Kraftfahrzeuges 1 angepasst sein können. Sie beginnt im Fahrgastinnenraum 2, durchbricht die Stirnwand 25 und mündet in Fahrtrichtung gesehen unmittelbar vor dem zweiten Wärmeübertrager 7. Es kann auch vorgesehen sein, dass die zweite Leitstruktur 12 direkt an den zweiten Wärmeübertrager 7 angekoppelt ist. Es kann auch vorgesehen sein, dass die zweite Leistruktur 12 luftstromabwärts des zweiten Wärmeübertragers weitergeführt ist, um den zweiten Luftstrom 13 sinnvoll an geeigneter Stelle der Umgebungsluft 22 zuzuführen. Die zweite Leitstruktur 12 ist somit geeignet, Luft aus dem Fahrgastinnenraum 2 in den zweiten Wärmeübertrager 7 zu leiten. Hier kann nun der erfindungsgemässe Energieaustausch zwischen dem Wärmeübertragungsmedium und dem zweiten Luftstrom 13 dargestellt werden. Im Kühlmodus wird das Wärmeübertragungsmedium vom zweiten Luftstrom 13 zusätzlich gekühlt, was die Energieeffizienz der Klimaanlage 3 verbessert. Der zweite Wärmeübertrager 7 ist in diesem Beispiel direkt an der Fahrzeugfront benachbart zum Kühlergrill angeordnet. Somit kann im zweiten Wärmeübertrager 7 ebenso ein Energieaustausch zwischen der Umgebungsluft 22 und dem Wärmeübertragungsmedium dargestellt werden. Die Umgebungsluft 22 und der zweite Luftstrom 13 können auch als Mischluft zugeführt werden. Zur Förderung der Umgebungsluft 22 in den zweiten Wärmeübertrager 7 kann die Bewegung des Kraftfahrzeuges 1 herangezogen werden, was als Fahrtwind bezeichnet wird. Ebenso kann ein Luftfördermittel für die Förderung von Umgebungsluft 22 in den zweiten Wärmeübertrager 7 vorgesehen sein, was hier nicht dargestellt ist.

In diesem Ausführungsbeispiel ist in der ersten Leitstruktur 8 ein erstes Luftfördermittel 10 zur Erzeugung des ersten Luftstromes 11 vorgesehen. Die zweite Leitstruktur 12 stellt das Wegbefördern der Luft mittels des zweiten Luftstroms 13 aus dem Fahrgastinnenraum 2 sicher, so dass kein wesentlicher Überdruck im Kraftfahrzeug 1 entstehen kann. Somit ist es nicht zwingend, dass in der zweiten Leitstruktur 12 ein zweites Luftfördermittel 20 vorgesehen ist. Der zweite Luftstrom 13 wird somit von den Druckverhältnissen im Fahrgastinnenraum 2 sichergestellt. Ist ein zeitweiser Umluftbetrieb beispielsweise durch Betätigen einer oder mehrerer verschliessbaren Öffnungen 27 vorgesehen, so wird ja ein Luftstrom innerhalb des Fahrgastinnenraums 2 erzeugt, der keine Luftzufuhr von Umgebungsluft 22 umfasst und somit auch keinen zweiten Luftstrom 13 erzeugt. Sobald jedoch Umgebungsluft 22 über den äusseren Karosseriedurchbruch 9 in den Fahrgastinnenraum 2 befördert wird, wird gleichzeitig auch der zweite Luftstrom 13 in der zweiten Leitstruktur 12 erzeugt.

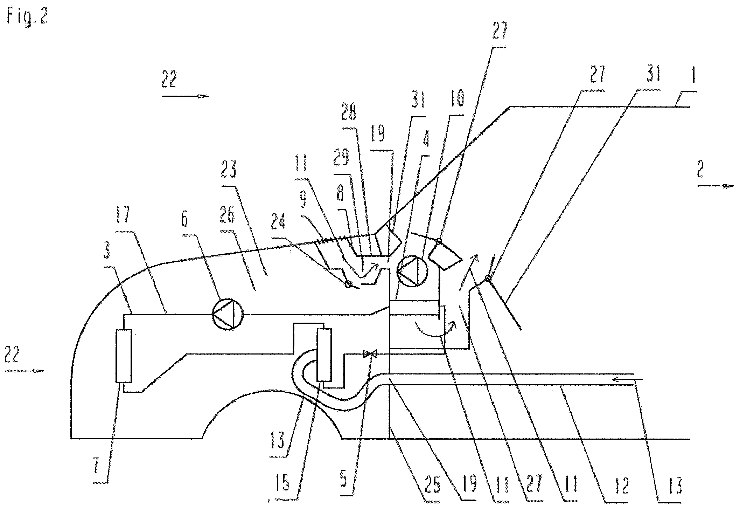

Fig. 2 beschreibt einen sehr ähnlichen Aufbau. Unterschied ist hier, dass ein weiterer zweiter Wärmeübertrager 15 vorgesehen ist. Der zweite Wärmeübertrager 7 ist wie in der Fig. 1 nahe zur Fahrzeugfront angeordnet, der weitere zweite Wärmeübertrager 15 ist hier benachbart zur Stirnwand 25 dargestellt. Benachbart bedeutet hier, dass er zwischen einem Vortriebsaggregat (hier nicht dargestellt) und der Stirnwand 25 im Motorraum 26 angeordnet ist. Die zweite Leitstruktur 12 leitet nun den zweiten Luftstrom 13 in diesen weiteren zweiten Wärmeübertrager 15, wo ein erfindungsgemässer Energieaustausch zwischen dem Wärmeübertragungsmedium und dem zweiten Luftstrom 13 dargestellt werden kann. Die zweite Leitstruktur 12 kann somit geometrisch kürzer und somit einfacher ausgestaltet sein. Weiterhin kann ein negativer Energieübergang zwischen der Umgebungsluft 22 bzw. der Motorraumluft 23 verringert werden. Auch kann der weitere zweite Wärmeübertrager 15 optimal dem zweiten Luftstrom 13 angepasst werden, so dass ein hocheffizienter Energieaustasuch ermöglicht wird. Insbesondere kann der weitere zweite Wärmeübertrager 15 kleiner ausgestaltet sein als der zweite Wärmeübertrager 7. Dies ist dann besonders günstig, wenn der zweite Luftstrom 13 geringer gestaltet ist als beispielsweise der auf den zweiten Wärmeübertrager 7 treffende Fahrtwind. Es ist auch möglich, den weiteren zweiten Wärmeübertrager 15 innerhalb der zweiten Leitstruktur 12 anzuordnen. Eine solche Anordnung vermeidet allfällige Verluste, wenn ein Teil des zweiten Luftstromes 13 ansonsten so um den weiteren zweiten Wärmeübertrager herum fliessen würde, dass ein verringerter Energieaustausch zwischen dem zweiten Luftstrom 13 und dem Wärmeübertrgungsmedium auftreten würde.

Weiterhin ist eine mögliche Ausführungsform derart ausgestaltet, dass die zweite Leitstruktur 12 neben der Führung in den weiteren zweiten Wärmeübertrager 15 über eine hier nicht dargestellte Verzweigung ebenso in den zweiten Wärmeübertrager 7 geführt wird. Diese Verzweigung kann beispielsweise über bewegliche Umlenkelemente geschaltet werden. Solche Ausgestaltungen können insbesondere dann vorteilhaft sein, wenn Klimaanlagen 3 mit mehreren ersten und / oder zweiten Wärmeübertragern 4,7 vorgesehen sind. Diese sind dann gemäss dem Stand der Technik häufig so verschaltet, dass die Wärmeübertrager 4,7 in einem Modus, beispielsweise Heizmodus, eine Übertragungsfunktion übernehmen, im anderen, beipsielswiese im Kühlmodus, jedoch nicht. Beispielsweise können im fluidischen Zyklus des Wärmeüberragungsmediums vier Wärmeübertrager 4,7 vorgesehen sein, die jeweils nur in einem Modus betrieben werden. Dann kann die Anordnung solcher bevorzugt schaltbaren Verzweigungen sinnvoll sein, um den zweiten Luftstrom 13 in jedem Modus vor den am energetisch besten geeigneten zweiten Wärmeübertrager 7, 15 zu führen.

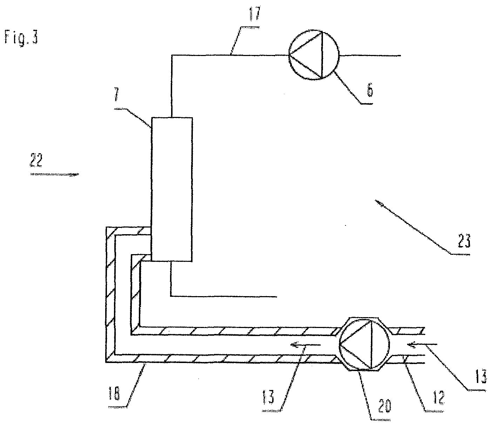

Fig. 3 beschreibt einen Ausschnitt aus den Fig. 1 oder 2. Es ist ein zweiter Wärmeübertrager 7 dargestellt, dem im oberen Bereich Umgebungsluft 22, beispielsweise durch den Fahrtwind oder ein hier nicht dargestelltes Luftfördermittel, zugeführt wird. Es ist angedeutet, dass in diesem Ausführungsbeispiel der Verdichter 6 einen Fluss des Wärmeübertragungsmediums entgegen dem Uhrzeigersinn erzeugt. In dem oberen Bereich des zweiten Wärmeübertragers kann ein Energieaustausch zwischen der Umgebungsluft 22 und dem Wärmeübertragungsmedium stattfinden. In einem bezogen auf das Wärmeübertragungsmedium fluidisch stromabwärts gelegenen Bereich des zweiten Wärmeübertragers 7 ist die zweite Leitstruktur 12 angeordnet. Diese ist nun geeignet, den zweiten Luftstrom 13 so in den zweiten Wärmeübertrager 7 zu führen, dass ein Energieaustasuch mit dem Wärmeübertragungsmedium erfolgen kann. Diese Anordnung weist den Vorteil auf, dass der zweite Wärmeübertrager 7 bereichsweise optimal auf den Strom der Umgebungsluft 22 bzw. auf den zweiten Luftstrom 13 eingestellt werden kann. Dennoch reicht hier die Anordnung lediglich eines zweiten Wärmeübertragers 7, was einen einfachen Aufbau ermöglicht.

Die zweite Leitstruktur 12 dieses Ausführungsbeispiels weist eine thermische Isolation 18 zur Umgebungsluft 22 bzw. zur Motorraumluft 23 auf. Solche Ausgestaltungen verhindern oder verringern einen negativen Energieaustausch mit der Umgebungsluft 22 bzw. mit der Motorraumluft 23.

Ebenso ist in diesem Ausführungsbeispiel ein zweites Luftfördermittel 20 in der zweiten Leitstruktur 12 angeordnet, welches den zweiten Luftstrom 13 besonders präzise steuern kann. Ist nun in der ersten Leitstruktur 8 ebenfalls ein erstes Luftfördermittel 10 angeordnet, so kann dieses erste Luftfördermittel 10 mit Hilfe der Betätigung der verschliessbaren Öffnungen 27 beispielsweise einen Umluftstrom realisieren, während das zweite Luftfördermittel 20 in der zweiten Leitstruktur 12 nicht nur den zweiten Luftstrom 13 erzeugt, sondern über die Konstanthaltung der Druckverhältnisse im Fahrgastinnenraum den ersten Luftstrom 12, der Umgebungsluft 22 in den Fahrgastinnenraum 2 befördert. Eine solche Ausgestaltung ist somit besonders gut geeignet, einen kontinuierlichen, präzise gesteuerten gleichzeitigen ersten (11) und zweiten (13) Luftstrom einerseits und einen unabhängig erzeugten Umluftstrom bereitzustellen. Damit kann mit der Gesamtanordnung dieser Ausführungsform, beispielsweise in Abhängigkeit von der Zahl der Insassen im Fahrgastinnenraum 2 oder in Abhängigkeit der Konzentration an gasförmigem Kohlendioxid, eine konstant hohe Luftqualität bei hoher Energieeffizienz der Klimaanlage 3 des Kraftfahrzeuges 1 erzeugt werden.

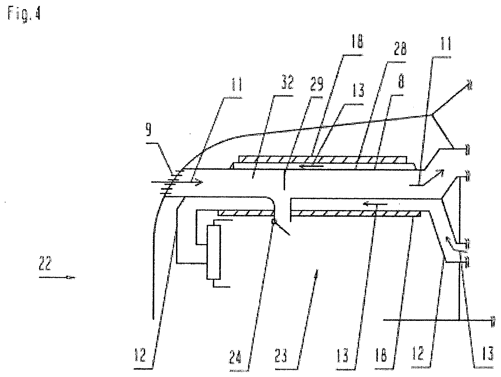

In Fig. 4 ist eine weitere Ausführungsform ausschnittsweise dargestellt. Die erste Leitstruktur 8 weist den äusseren Karosseriedurchbruch 9 im Frontbereich des Fahrzeuges auf, wobei in die erste Leitstruktur 8 ein länglich gestalteter Wasserkasten 28 integriert ist. Innerhalb des Wasserkastens 28 ist ebenso ein verschliessbarer Wasserablass 24 und ein Abscheideelement 29 skizziert. Weiter ist eine zweite Leitstruktur 13 vorgesehen, die im Fahrgastinnenraum 2 beginnt und sich um die erste Leitstruktur 8 schmiegt, wodurch ein Niederdruck- Luft- Luft- Wärmeübertrager 32 gebildet wird. Das bedeutet, dass ein Teil der Energie, die in dem zweiten Luftstrom 13 enthalten ist, auf den ersten Luftstrom 11 übertragbar ist. Im Kühlmodus wird der erste Luftstrom 11 vorgekühlt, im Heizmodus wird er vorgewärmt. Gleichzeitig wird verhindert oder verringert, dass der erste Luftstrom 11 im Kühlmodus beispielweise bei hoher Sonneneinstrahlung oder hoher Abwärme vom Motor zusätzlich aufgewärmt wird. Der zweite Luftstrom 13 wird erfindungsgemäss nach Verlassen des Niederdruck- Luft- Luft- Wärmetauschers 32 in den zweiten Wärmeübertrager 7 geleitet, wo erfindungsgemäss ein Energieaustausch mit dem Wärmeübertragungsmedium stattfinden kann.

Zusätzlich ist die zweite Leitstruktur 12 dieses Ausführungsbeispiels mit einer thermischen Isolation 18 versehen, die einen unerwünschten Energieübergang durch Sonneneinstrahlung oder durch Wechselwirkung mit der Umgebungsluft 22 und / oder Motorraumluft 23 auf den zweiten Luftstrom 13 verhindert oder verringert.

Eine solche Anordnung ist besonders vorteilhaft, weil die Energie der aus dem Fahrgastinnenraum 2 auszuscheidenden Luft energetisch besonders gut genutzt werden kann und gleichzeitig negative Umgebungseinflüsse verhindert werden. Der erste Luftstrom ist somit sowohl durch die thermische Isolation 18 als auch durch den zweiten Luftstrom 13 von negativen Einflüssen geschützt..

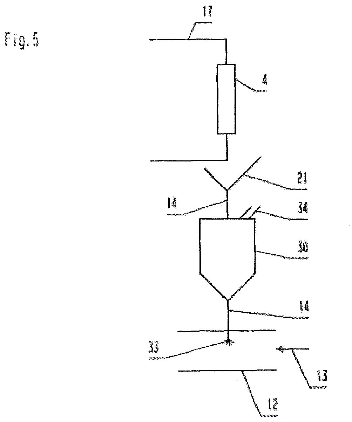

Fig. 5 beschreibt ausschnittsweise, wie der zweite Luftstrom 13 im Kühlmodus zusätzlich gekühlt werden kann indem im verdunstbares Wasser zugeführt wird.

Es ist der oder ein erster Wärmeübertrager 4 mit der fluidischwen Verbindung 17 dargestellt, der gleichzeitig Mittel zum Auffangen von Kondenswasser 21 aufweist. Kondenswasser kann am ersten Wärmeübertrager 4 im Kühlmodus anfallen. Ebenso ist ein Vorratsbehälter für Wasser 30 vorgesehen. Er kann über eine Leitung für Wasser 14 allfälliges Kondeswasser aufnehmen, aber ebenso von aussen mit Wasser über eine Befüllvorrichtung 34 aufgefüllt werden.

Vom Vorratsbehälter für Wasser 30 führt eine Leitung für Wasser 14 zu einem in der zweiten Leitstruktur 12 angeordnetem Wasserzerstäuber 33, der geeignet ist, Wasser zu zerstäuben oder zu vernebeln. Als Wasserzerstäuber 33 kann ein Ultraschallzerstäuber vorgesehen sein, es sind aber weitere Ausführungsformen möglich, die eine Verdunstung von Wasser in der zweiten Leitstruktur 12 ermöglichen können. Dies kann beispielsweise eine Sprühvorrichtung sein. Dieses zerstäubte, vernebelte oder versprühte Wasser kann nun dem zweiten Luftstrom 13 zugeführt werden, wo es verdampft und so zu einer weiteren Kühlung des zweiten Luftstromes 13 führt. Diese Verdunstungskälte kann nun ebenso über den Niederdruck- Luft- Luft- Wärmeübertrager 32 auf den ersten Luftstrom 11 übertragen werden, die in dem zweiten Luftstrom 13 enthaltene Energie steht aber auch alternativ oder zusätzlich für einen Energieübergang auf auf das Wärmeübertragungsmedium eines zweiten Wärmeübertragers 7, 15 zur Verfügung. Solche Ausführungsformen sind unter energetischen Gesichtspunkten besonders effizient. Vorteilhaft ist weiterhin insbesondere bei der Ausführungsform mit einem von Aussen befüllbaren Vorratsbehälter 30, 34, dass die Verdunstungskälte für eine Energieübertragung auch dann genutzt werden kann, wenn dem ersten Luftstrom 11 bei sehr trockener Umgebungsluft 22, beispielsweise in Wüstenklimaten, keine oder keine ausreichenden Wassermengen am ersten Wärmeübertrager 4 entzogen werden können .

### Bezugszeichenliste

- 1: Kraftfahrzeug
- 2: Fahrgastrinnenaum
- 3: Klimaanlage
- 4: Erster Wärmeübertrager
- 5: Expansionsventil
- 6: Verdichter
- 7: Zweiter Wärmeübertrager
- 8: Erste Leitstruktur
- 9: Äusserer Karosseriedurchbruch
- 10: Erstes Luftfördermittel
- 11: Erster Luftstrom
- 12: Zweite Leitstruktur
- 13: Zweiter Luftstrom
- 14: Leitung für Wasser
- 15: Weiterer zweiter Wärmeübertrager
- 16:
- 17: Fluidische Verbindung
- 18: Thermische Isolation
- 19: Stimwanddurchbruch
- 20: Zweites Luftfördermittel
- 21: Mittel zum Auffangen von Kondenswasser
- 22: Umgebungsluft
- 23: Motorraumluft
- 24: Verschliessbarer Wasserablass
- 25: Stirnwand
- 26: Motorraum
- 27: Verschliessbare Öffnung
- 28: Wasserkasten
- 29: Abscheideelement
- 30: Vorratsbehälter für Wasser
- 31: Instrumentenverkleidung
- 32: Niederdruck- Luft- Luft- Wärmeübertrager
- 33: Wasserzerstäuber
- 34: Befüllvorrichtung

## Patentansprüche

1. Kraftfahrzeug mit einem Fahrgastinnenraum (2) sowie einem Motorraum (26), wobei der Fahrgastinnenraum (2) vom Motorraum (26) durch eine Stirnwand (25) getrennt ist, mit einer Klimaanlage (3) zum Heizen und / oder Kühlen des Fahrgastinnenraumes (2), die einen Verdichter (6), ein Expansionsventil (5), einen ersten Wärmeübertrager (4) und mindestens einen zweiten Wärmeübertrager (7; 15) umfasst, welche mittels eines Wärmeübertragungsmediums fluidisch miteinander verbunden sind, weiter umfassend eine erste Leitstruktur (8) zur Leitung eines ersten Luftstromes (11) von einem äusseren Karosseriedurchbruch (9) in den ersten Wärmeübertrager (4), der geeignet ist, einen Energieaustausch zwischen dem Wärmeübertragungsmedium und dem ersten Luftstrom (11) darzustellen, wobei der erste Wärmeübertrager (4) mit dem Fahrgastinnenraum (2) verbunden ist zum Zuführen des ersten Luftstroms (11) in den Fahrgastinnenraum (2), und wobei eine zweite Leitstruktur (12) zur Leitung eines zweiten Luftstroms (13) vorgesehen ist, die geeignet ist, Luft aus dem Fahrgastinnenraum (2) in den zweiten Wärmeübertrager (7; 15) zu leiten, der geeignet ist, einen Energieaustausch zwischen dem Wärmeübertragungsmedium und dem zweiten Luftstrom (13) darzustellen, **dadurch gekennzeichnet, dass** die erste (8) und die zweite Leitstruktur (12) so zueinander angeordnet und ausgebildet sind, dass ein Energieaustausch zwischen dem ersten (11) und zweiten Luftstrom (13) möglich ist.

2. Kraftfahrzeug nach Anspruch 1, **dadurch gekennzeichnet, dass** die zweite Leitstruktur (12) geeignet ist, den zweiten Luftstrom (13) vor einen Teilbereich eines zweiten Wärmeübertragers (7; 15) zu leiten, der sich innerhalb des zweiten Wärmeübertragers (7; 15) bevorzugt fluidisch stromabwärts zum Umgebungsluftstrom befindet.

3. Kraftfahrzeug nach Anspruch 1 oder 2, **dadurch gekennzeichnet, dass** die Klimaanlage (3) wenigstens einen weiteren Wärmeübertrager (7) umfasst, welcher mittels des Wärmeübertragungsmediums fluidisch mit dem Verdichter (6), dem Expansionsventil (5), dem ersten Wärmeübertrager (4) und dem mindestens einen zweiten Wärmeübertrager (15) verbunden ist.

4. Kraftfahrzeug nach Anspruch 3, **dadurch gekennzeichnet, dass** der zweite Wärmeübertrager (15) kleiner dimensioniert ist als der weitere Wärmeübertrager (7).

5. Kraftfahrzeug nach Anspruch 3 oder 4, **dadurch gekennzeichnet, dass** der wenigstens eine zweite Wärmeübertrager (15) benachbart zur Stirnwand (25) angeordnet ist.

6. Kraftfahrzeug nach einem der Ansprüche 3 oder 4, **dadurch gekennzeichnet, dass** der wenigstens eine zweite Wärmeübertrager (15) innerhalb des Fahrgastinnenraumes (2), insbesondere innerhalb einer Instrumentenverkleidung (31) des Kraftfahrzeuges (1), angeordnet ist.

7. Kraftfahrzeug nach einem der Ansprüche 1 bis 6, **dadurch gekennzeichnet, dass** die erste Leitstruktur (8) geeignet ist, tropfenförmiges und/oder schwallförmiges Wasser aus dem ersten Luftstrom (11) abzuscheiden und das abgeschiedene Wasser aus der ersten Leitstruktur (8) und insbesondere aus dem Kraftfahrzeug (1) auszuscheiden.

8. Kraftfahrzeug nach einem der vorhergehenden Ansprüche, **dadurch gekennzeichnet, dass** ein in die erste Leitstruktur (8) eingebundener Wasserkasten (28) zumindest überwiegend, bevorzugt weitgehend, als Niederdruck- Luft- Luft- Wärmeübertrager (32) ausgestaltet ist.

9. Kraftfahrzeug nach einem der Ansprüche 1 bis 8, **dadurch gekennzeichnet, dass** die erste (8) und/ oder die zweite Leitstruktur (12) zumindest im Motorraum (26) mit einer thermischen Isolation (18) zur Umgebungsluft (22) hin und/oder zur Motorraumluft (23) hin versehen ist.

10. Kraftfahrzeug nach einem der Ansprüche 1 bis 9, **dadurch gekennzeichnet, dass** es mit Mitteln zum Auffüllen und Aufbewahren eines Wasservorrats (30,34) und des weiteren mit Mitteln (33) ausgestattet ist, die es ermöglichen, bevorratetes Wasser in die zweite Leitstruktur (12) zu befördern und gegebenenfalls dort zu zerstäuben und / oder zu verdampfen.

11. Kraftfahrzeug nach Anspruch 10, **dadurch gekennzeichnet, dass** der erste Wärmeübertrager (4) mit Mitteln zum Auffangen von allfälligem Kondenswasser (21) und zum Zuführen des Kondenswassers (14) zu dem Mittel zum Aufbewahren eines Wasservorrats (30) ausgestattet ist.

12. Kraftfahrzeug nach einem der Ansprüche 1 bis 11, **dadurch gekennzeichnet, dass** als Wärmeübertragungsmedium Kohlendioxid vorgesehen ist.

13. Kraftfahrzeug nach einem der Ansprüche 1 bis 12, **dadurch gekennzeichnet, dass** die Klimaanlage (3) keinen inneren Wärmeübertrager enthält.

14. Kraftfahrzeug nach einem der Ansprüche 1 bis 13, **dadurch gekennzeichnet, dass** innerhalb der zweiten Leitstruktur (12) ein zweites Luftfördermittel (20) vorgesehen ist.

## Claims

1. A motor vehicle having a passenger inner space (2) and an engine compartment (26), wherein the passenger inner space (2) is separated from the engine compartment (26) by a front wall (25), having an air-conditioning system (3) which is for heating and/or cooling the passenger inner space (2) and which comprises a compressor (6), an expansion valve (5), a first heat exchanger (4) and at least one second heat exchanger (7; 15), which are connected to each other in fluidic terms by means of a heat exchange medium, further comprising a first guiding structure (8) in order to guide a first air flow (11) from an outer bodywork opening (9) into the first heat exchanger (4) which is suitable for constituting an energy exchange between the heat exchange medium and the first air flow (11), wherein the first heat exchanger (4) is connected to the passenger inner space (2) in order to supply the first air flow (11) to the passenger inner space (2), and wherein there is provided for guiding a second air flow (13) a second guiding structure (12) which is suitable for guiding air from the passenger inner space (2) into the second heat exchanger (7; 15) which is suitable for constituting an energy exchange between the heat exchange medium and the second air flow (13), **characterized in that** the first guiding structure (8) and the second guiding structure (12) are arranged and constructed relative to each other so that an energy exchange is possible between the first air flow (11) and second air flow (13).

2. The motor vehicle as claimed in claim 1, **characterized in that** the second guiding structure (12) is suitable for guiding the second air flow (13) upstream of a partial region of a second heat exchanger (7; 15) which is preferably located downstream in fluidic terms inside the second heat exchanger (7; 15) with respect to the ambient air flow.

3. The motor vehicle as claimed in claim 1 or claim 2, **characterized in that** the air-conditioning system (3) comprises at least one additional heat exchanger (7) which is connected in fluidic terms to the compressor (6), the expansion valve (5), the first heat exchanger (4) and the at least one second heat exchanger (15) by means of a heat exchange medium.

4. The motor vehicle as claimed in claim 3, **characterized in that** the second heat exchanger (15) has smaller dimensions than the additional heat exchanger (7).

5. The motor vehicle as claimed in claim 3 or claim 4, **characterized in that** the at least one second heat exchanger (15) is arranged adjacent to the front wall (25).

6. The motor vehicle as claimed in either claim 3 or claim 4, **characterized in that** the at least one second heat exchanger (15) is arranged inside the passenger inner space (2), in particular inside an instrument trim (31) of the motor vehicle (1).

7. The motor vehicle as claimed in one of claims 1 to 6, **characterized in that** the first guiding structure (8) is suitable for separating drop-like and/or gush-like water out of the first air flow (11) and for removing the separated water from the first guiding structure (8) and in particular from the motor vehicle (1).

8. The motor vehicle as claimed in one of the preceding claims, **characterized in that** a water box (28), which is incorporated in the first guiding structure (8), is constructed at least predominantly, preferably substantially, as a low-pressure, air/air heat exchanger (32).

9. The motor vehicle as claimed in one of claims 1 to 8, **characterized in that** the first guiding structure (8) and/or second guiding structure (12) is/are provided at least in the engine compartment (26) with a thermal insulation (18) in the direction toward the ambient air (22) and/or the engine compartment air (23).

10. The motor vehicle as claimed in one of claims 1 to 9, **characterized in that** it is provided with means for filling and storing a water supply (30, 34) and further with means (33) which make it possible to convey stored water into the second guiding structure (12) and, where applicable, to atomize and/or evaporate it there.

11. The motor vehicle as claimed in claim 10, **characterized in that** the first heat exchanger (4) is provided with means for collecting any condensation water (21) and for supplying the condensation water (14) to the means for storing a water supply (30).

12. The motor vehicle as claimed in one of claims 1 to 11, **characterized in that** carbon dioxide is provided as the heat exchange medium.

13. The motor vehicle as claimed in one of claims 1 to 12, **characterized in that** the air-conditioning system (3) does not contain an inner heat exchanger.

14. The motor vehicle as claimed in one of claims 1 to 13, **characterized in that** a second air conveying means (20) is provided inside the second guiding structure (12).

## Revendications

1. Un véhicule automobile (1) ayant un habitacle (2) ainsi qu'un compartiment moteur (26), l'habitacle (2) étant séparé du compartiment moteur (26) par l'intermédiaire d'une paroi frontale (25), ayant une climatisation (3) destinée à chauffer et/ou refroidir l'habitacle (2) et qui comprend un compresseur (6), un détendeur (5), un premier échangeur de chaleur (4) et au moins un second échangeur de chaleur (7 ; 15) qui sont reliés l'un à l'autre de manière fluidique à l'aide d'un milieu de transfert de chaleur, ainsi que comprenant une première structure de conduction (8) destinée à conduire un premier écoulement d'air (11) depuis une perforation extérieure de carrosserie (9) jusque dans le premier échangeur de chaleur (4) qui est conçu pour représenter un échange d'énergie entre le milieu de transfert de chaleur et le premier écoulement d'air (11), le premier échangeur de chaleur (4) étant relié à l'habitacle (2) pour acheminer le premier écoulement d'air (11) dans l'habitacle (2) et une seconde structure de conduction (12) destinée à conduire un second écoulement d'air (13) est prévue, qui est conçue pour diriger l'air de l'habitacle (2) jusque dans le second échangeur de chaleur (7 ; 15), qui est conçu pour représenter un échange d'énergie entre le milieu de transfert de chaleur et le second écoulement d'air (13), **caractérisé en ce que** la première (8) et la seconde (12) structure de conduction sont disposées l'une par rapport à l'autre de telle sorte et conçues de telle sorte qu'un échange d'énergie entre le premier et le second écoulement d'air (13) est possible.

2. Véhicule automobile selon la revendication 1, **caractérisé en ce que** la seconde structure de conduction (12) est conçue pour conduire le second écoulement d'air (13) vers le devant d'une zone partielle d'un second échangeur de chaleur (7; 15), qui se situe à l'intérieur du second échangeur de chaleur (7; 15), préférablement fluidiquement en aval par rapport à l'écoulement d'air environnant.

3. Véhicule automobile selon la revendication 1 ou 2, **caractérisé en ce que** la climatisation (3) comprend au moins un autre échangeur de chaleur (7), lequel est relié fluidiquement à l'aide du milieu de transfert de chaleur avec le compresseur (6), le détendeur (5), le premier échangeur de chaleur (4) et l'au moins un second échangeur de chaleur (15).

4. Véhicule automobile selon la revendication 3, **caractérisé en ce que** le second échangeur de chaleur (15) est dimensionné de taille inférieure à l'autre échangeur de chaleur (7).

5. Véhicule automobile selon la revendication 3 ou 4, **caractérisé en ce que** l'au moins second échangeur de chaleur (15) est disposé à côté de la paroi frontale (25).

6. Véhicule automobile selon une de revendications 3 ou 4, **caractérisé en ce que** l'au moins second échangeur de chaleur (15) est disposé à l'intérieur de l'habitacle (2), en particulier à l'intérieur du tableau de bord (31) du véhicule automobile (1)

7. Véhicule automobile selon une de revendications 1 à 6, **caractérisé en ce que** la première structure de conduction (8) est conçue pour éliminer de l'eau en forme de goutte et/ou cascade du premier écoulement d'air (11) et pour éliminer l'eau éliminée de la première structure du conduction (8) et en particulier du véhicule automobile (1).

8. Véhicule automobile selon une des revendications précédentes, **caractérisé en ce qu'**une boîte à eau (28) intégrée dans la première structure de conduction (8) est réalisée au moins principalement, préférablement largement, en tant que échangeur de chaleur de type faible pression-air-air (32).

9. Véhicule automobile (1) selon la revendication 1 à 8, **caractérisé en ce que** la première (8) et/ou la seconde structure de conduction (12) est munie au moins dans le compartiment moteur (26) d'une isolation thermique (18) par rapport à l'air environnant (22) et/ou l'air du compartiment de moteur (23).

10. Véhicule automobile selon une de revendications 1 à 9, **caractérisé en ce que** celui-ci est équipé de moyens pour remplir et stocker une réservé d'eau (30, 34) et est équipé en outre de moyens (33) qui permettent d'acheminer de l'eau stockée vers la seconde structure de conduction (12) et éventuellement de la pulvériser et/ou évaporer à cet endroit.

11. Véhicule automobile selon la revendication 10, **caractérisé en ce que** le premier échangeur de chaleur (4) est équipé de moyens pour recueillir de l'eau de condensation (21) éventuelle et pour acheminer l'eau de condensation (14) vers le moyen de stockage de la réserve d'eau (30).

12. Véhicule automobile selon une de revendications 1 à 11, **caractérisé en ce que** le dioxyde de carbone est prévu en tant que milieu de transfert de chaleur.

13. Véhicule automobile selon une de revendications 1 à 12, **caractérisé en ce que** la climatisation (3) ne comporte aucun échangeur de chaleur interne.

14. Véhicule automobile selon une de revendications 1 à 13, **caractérisé en ce que** à l'intérieur de la seconde structure de conduction (12) un second moyen d'acheminement d'air (20) est prévu.
